# FASCICULE DE BREVET EUROPEEN

(11) **EP 0 686 449 B1**
(45) Date de publication et mention de la délivrance du brevet: **29.04.1998**
(21) Numéro de dépôt: 95401272.0
(22) Date de dépôt: 01.06.1995
(51) Int. Cl.: B23B 31/18

(54) **Mandrin de serrage à mors**
Spannbackenfutter
Clamping jaws chuck

(30) Priorité: 07.06.1994 FR 9406935
(43) Date de publication de la demande: 13.12.1995
(73) Titulaire: SANDVIK TOBLER S.A., F-95380 Louvres (FR)
(72) Inventeur: Barbieux, Jacques, F-95380 Louvres (FR)
(74) Mandataire: Lhuillier, René

(56) Documents cités:
- EP-A- 0 251 266
- DE-A- 1 502 035
- FR-A- 2 373 351

## Description

L'invention concerne un mandrin de serrage à mors. On connait notamment par le FR- A-2 373 351 (qui correspond au préambule de la revendication 1) au nom de la Demanderesse un mandrin dans le corps duquel coulisse axialement une tige de traction qui agit sur un système de transmission permettant de transformer un déplacement axial de cette tige en un déplacement radial au niveau de chaque porte-mors. Ces derniers sont pourvus de méplats latéraux coopérant avec des méplats ménagés dans le corps de manière à guider le coulissement radial des porte-mors.

Grâce à cette disposition, la transmission de la force de serrage de la tige sur les mors s'exerce par l'intermédiaire de facettes inclinées et la répartition de la force est la même sur chaque mors. Ce système généralement satisfaisant peut cependant présenter un inconvénient lié au caractère hyperstatique du serrage ainsi obtenu. En effet, chaque porte-mors ne peut que très faiblement pivoter axialement, ce qui implique que les mors n'épousent parfois qu'imparfaitement la forme de la pièce qu'ils doivent serrer.

Ainsi, dans le cas d'éléments comme des tambours et disques de freins, bagues de roulement, flasques, volants ou roues, un tel serrage hyperstatique peut entraîner des déformations intempestives sensibles ce qui est inacceptable pour des pièces de précision dont les dimensions sont soumises à des tolérances très strictes.

Pour pallier à ces inconvénients, l'invention a pour objet un mandrin de serrage permettant un guidage radial précis des porte-mors dans le corps du mandrin et assurant en outre une liberté de pivotement axial de ces derniers en vue d'un positionnement optimal des mors au contact de la pièce à serrer.

A cet effet, l'invention concerne plus précisément un mandrin de serrage à mors comprenant :
- un corps
- une tige de traction coulissant axialement dans ledit corps
- au moins un porte-mors coulissant radialement dans ledit corps
- un système de transmission permettant de transformer un déplacement axial de la tige de traction en un déplacement radial de chaque porte-mors,
   mandrin dans lequel chaque porte-mors est équipé d'un élément de guidage guidé radialement le long d'une rainure ménagée au sein du mandrin, ledit élément de guidage étant uniquement libre de pivoter axialement par rapport au porte-mors.

L'adjonction de cet élément permet ainsi de réaliser les objectifs précités, en assurant un guidage radial précis du porte-mors et en laissant la possibilité à ce dernier de pivoter autour de son axe.

D'autres avantages et caractéristiques apparaîtront à la lecture de la description d'un mode particulier de réalisation de l'invention, faite en référence aux dessins annexés dans lesquels :
la figure 1 est une représentation d'un mandrin conforme à l'invention et comportant trois mors, selon une coupe passant par l'axe du corps et par un porte-mors ;
la figure 2 est un agrandissement d'une partie de la figure 1 ;
la figure 3 est une vue de face d'une chape de guidage conforme à l'invention ;
la figure 4 est un détail en coupe transversale selon la ligne IV-IV de la figure 1 ;
la figure 5, analogue à la figure 1, représente une variante d'exécution de l'invention.

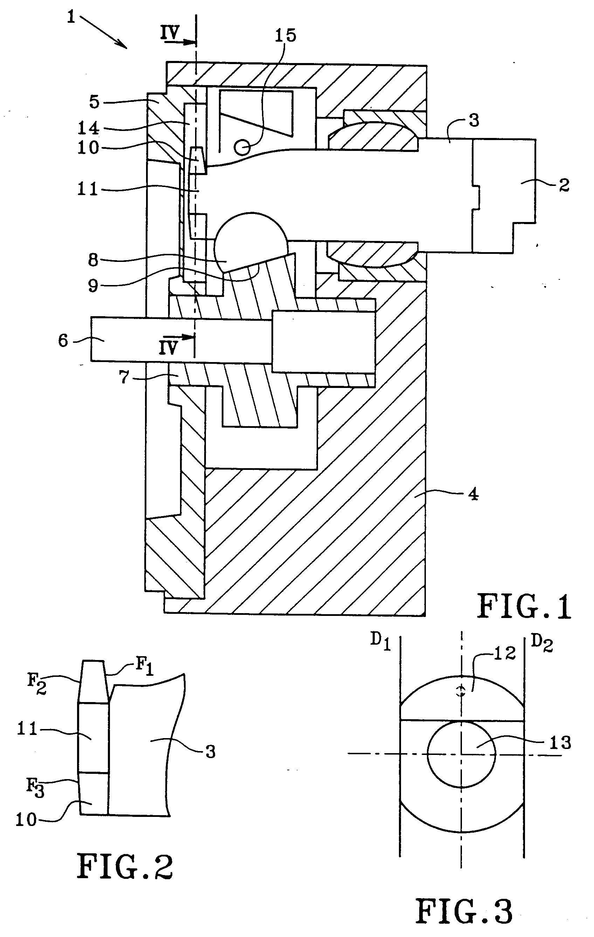

Comme le montre la figure 1, l'invention concerne un mandrin de serrage désigné dans son ensemble par la référence 1, qui est pourvu de trois mors 2 espacés angulairement de 120°, montés chacun sur un porte-mors 3. Le mandrin comprend, de manière connue, un corps 4 à l'arrière duquel est fixé un plateau 5 et dans lequel une tige de traction 6 est à même de coulisser axialement afin d'astreindre le porte-mors 3 à un déplacement radial. La transmission du mouvement s'effectue par l'intermédiaire d'un système de transmission incluant un disque de commande 7 ainsi qu'une pièce d'appui 8. Le disque de commande est monté sur la tige de traction 6 et présente une face 9 inférieure d'appui, plane et possédant une certaine obliquité. La pièce d'appui 8 est constituée par une bille tronquée présentant une surface plane coopérant avec la face d'appui 9 du disque de commande 7. Cette bille 8 est logée dans une échancrure correspondante du porte-mors 3.

Comme le montrent plus précisément les figures 2 et 3, une chape 10 faisant office d'élément de guidage, est disposée sur le tourillon 11 du porte-mors selon un ajustement glissant.

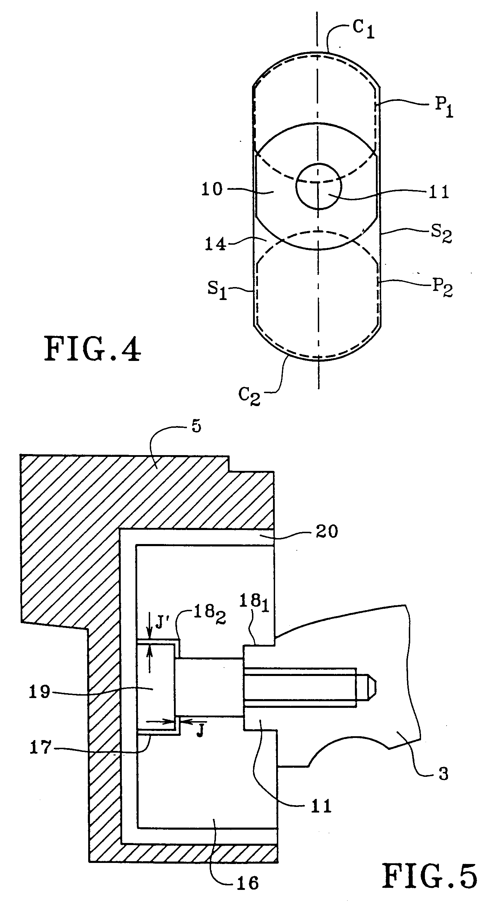

A cet effet, cette chape 10 est constituée par un disque mince 12 présentant en son centre un évidement 13 dont les dimensions correspondent à celles du tourillon 11. La chape est en outre tronquée, en vue de face, selon deux plans parallèles D₁ et D₂ et présente en coupe transversale, trois faces (F₁, F₂, F₃) en dépouille. Une rainure 14, ménagée dans le plateau 5 fixé à l'arrière du corps 4 du mandrin 1, s'étend axialement un peu au-delà de l'extrémité de la chape 10 opposée à l'emplacement des mors 2. Vue de face, comme le montre la figure 4, cette rainure est constituée par deux portions de cercle C₁ et C₂ reliées par deux segments parallèles S₁ et S₂, de sorte que la surface définie par la rainure correspond à la course de la chape entre deux positions extrêmes P₁ et P₂.

De cette manière, lors de déplacements radiaux du porte-mors 3, la chape 10 se déplace à l'intérieur de la rainure 14, et permet ainsi un guidage radial du porte-mors 3. En outre, ce dernier étant libre de pivoter par rapport à la chape 10, chaque mors 2 se trouve lui-même apte à pivoter axialement afin de s'adapter au mieux à la surface de la pièce à maintenir, ce qui évite un serrage hyperstatique.

Le repositionnement du porte-mors 3 en position desserrée s'effectue par l'intermédiaire d'un axe de rappel 15. Dans cette position existe un jeu minimal entre le porte-mors et l'axe, leur surface de contact étant plane.

Dans l'éventualité où l'effet centrifuge des mors ne peut être compensé par la chape 10, une possibilité consiste à munir le tourillon 11 du porte-mors 3 d'une masselotte 16 comme le montre la figure 5. Cette dernière présente, en vue de face, une conformation analogue à celle de la chape. En revanche, pour accroître sa masse, elle possède des dimensions axiales bien plus importantes, de sorte qu'elle s'étend au-delà de l'extrémité du tourillon opposée au porte-mors.

Au sein de la masselotte 16 est ménagé un évidement 17 traversant, de sorte que la surface interne 18 de la masselotte 16 comprend une portion 18₁ destinée à coopérer avec le tourillon 11 du porte-mors 3, et une portion 18₂ permettant le passage de moyens de fixation 19. Ces derniers sont nécessaires pour que la masselotte 16 ne se désolidarise pas du porte-mors 3. Toutefois, il est préférable que subsistent entre la surface interne 18 de la masselotte et les moyens de fixation 19, des jeux axial J et radial J', afin de permettre un meilleur pivotement du porte-mors par rapport à la masselotte.

Lors des déplacements radiaux du porte-mors, la masselotte 16 est apte à se déplacer au sein de la rainure 20 ménagée dans le mandrin. Tout comme dans le cas de la chape 10 décrite précédemment, la rainure 20 s'étend axialement un peu au-delà de l'extrémité de la masselotte et présente, en vue de face, une conformation permettant d'assurer le guidage de la masselotte entre une position haute et une position basse.

## Revendications

1. Mandrin de serrage à mors comprenant :
- un corps (4)
- une tige de traction (6) coulissant axialement dans ledit corps (4)
- au moins un porte-mors (3) coulissant radialement dans ledit corps (4)
- un système de transmission permettant de transformer un déplacement axial de la tige de traction (6) en un déplacement radial de chaque porte-mors,
caractérisé en ce que chaque porte-mors (3) est équipé d'un élément de guidage (10; 15) guidé radialement le long d'une rainure (14) ménagée au sein du mandrin (1), ledit élément de guidage étant uniquement libre de pivoter axialement par rapport au porte-mors.

2. Mandrin selon la revendication 1, caractérisé en ce que l'élément de guidage est une chape (10) disposée sur le tourillon (11) du porte-mors selon un ajustement glissant.

3. Mandrin selon la revendication 2, caractérisé en ce que la chape (10) est constituée par un disque mince (12) tronqué selon deux droites parallèles (D₁, D₂), et présentant en son centre un évidement (13) dont les dimensions correspondent à celles du tourillon du porte-mors.

4. Mandrin selon la revendication 3, caractérisé en ce que la chape (10) présente en coupe transversale, au moins une face en dépouille (F₁; F₂; F₃).

5. Mandrin selon la revendication 1, caractérisé en ce que l'élément de guidage est une masselotte (16) de grande dimension axiale, maintenue sur le porte-mors par l'intermédiaire de moyens de fixation (19).

6. Mandrin selon la revendication 5, caractérisé en ce que subsistent entre la surface interne (18) de la masselotte (16) et les moyens de fixation (19), des jeux axial (J) et radial (J').

## Claims

1. Jaw-chuck comprising:
- a body (4)
- a traction rod (6) sliding axially in the said body
- at least one jaw holder (3) sliding radially in the said body (4)
- a transmission system converting an axial translation of the traction rod (6) into a radial translation of each jaw holder,
characterised in that each jaw holder (3) is fitted with a guiding member (10; 15) guided radially along a groove (14) recessed within said chuck (1), said guiding member being only free to swivel axially in relation to the jaw holder.

2. A chuck as claimed in claim 1, characterised in that the guiding member is a cap (10) arranged on a journal (11) of the jaw holder according to a sliding adjustment.

3. A chuck as claimed in claim 2, characterised in that the cap (10) consists of a thin disk (12) truncated along two parallel straight lines (D₁, D₂), and including at its centre a cavity (13) the dimensions of which correspond with those of the jaw holder journal.

4. A chuck as claimed in claim 3, characterised in that the cap (10) includes in cross section at least one relief surface (F₁; F₂; F₃).

5. A chuck as claimed in claim 1, characterised in that the guiding member is a fly-weight (16) of large axial dimension, held onto the jaw holder by fixing means (19).

6. A chuck as claimed in claim 5, characterised in that there are axial (J) and radial (J') plays between an internal surface (18) of said fly-weight (16) and said fixing means (19).

## Patentansprüche

1. Backenspannfutter mit:
- einem Grundkörper (4),
- einer Zugstange (6), welche axial in dem Grundkörper (4) geführt ist,
- wenigstens einem Spannbackenhalter (3), welcher radial in dem Grundkörper (4) geführt ist,
- ein Übertragungssystem, welches eine Axialverschiebung der Zugstange (6) in eine Radialverschiebung eines jeden Spannbackenhalters (3) umzuwandeln ermöglicht;
**dadurch gekennzeichnet,** daß jeder Spannbackenhalter (3) mit einem Führungselement (10, 15) ausgestattet ist, welches radial entlang einer Nut (14) im Innern des Spannfutters (1) geführt ist, wobei das Führungselement allein frei ist, sich im Verhältnis zu dem Spannbackenhalter zu verschwenken.

2. Spannfutter nach Patentanspruch 1, **dadurch gekennzeichnet,** daß das Führungselement ein Profilstück (10) ist, welches auf dem Zapfen (11) des Spannbackenhalters mit Gleitsitz angeordnet ist.

3. Spannfutter nach Patentanspruch 2, **dadurch gekennzeichnet,** daß das Profilstück (10) aus einer dünnen Scheibe (12) gebildet ist, die entlang von zwei parallelen Geraden (D₁; D₂) beschnitten ist, und welche in ihrem Zentrum eine Aussparung (13) aufweist, deren Abmessungen denen des Zapfens (11) des Spannbackenhalters entspricht.

4. Spannfutter nach Patentanspruch 3, **dadurch gekennzeichnet,** daß das Profilstück (10) im Querschnitt mindestens eine Schräge (F₁, F₂, F₃) aufweist.

5. Spannfutter nach Patentanspruch 1, **dadurch gekennzeichnet,** daß das Führungselement ein Regulierungsgewicht (16) von großer axialer Dimension ist, das auf dem Spannbackenhalter durch ein Zwischenbefestigungsmittel (19) gehalten ist.

6. Spannfutter nach Patentanspruch 5, **dadurch gekennzeichnet,** daß zwischen der Innenoberfläche (18) des Regulierungsgewichtes (16) und dem Zwischenbefestigungsmittel (19) axiales und radiales Spiel (J, J') besteht.
